# FASCICULE DE BREVET EUROPEEN

(11) **EP 2 845 705 B1**
(45) Date de publication et mention de la délivrance du brevet: **09.11.2016**
(21) Numéro de dépôt: 14183693.2
(22) Date de dépôt: 05.09.2014
(51) Int. Cl.: B29C 31/00, B29C 33/36, B29C 35/02, B29C 35/04, B29C 44/44, B29L 31/00

(54) **Procédé de fabrication d'objets issus d'un moulage d'une matière expansée dans un moule de fabrication**
Herstellungsverfahren von Gegenständen, die durch Formgussverfahren eines geschäumten Materials in einer Gussform für ihre Herstellung erzeugt werden
Method for manufacturing objects from moulding an expanded material in a manufacturing mould

(30) Priorité: 06.09.2013 FR 1358567
(43) Date de publication de la demande: 11.03.2015
(73) Titulaire: Delphia, 41600 Lamotte Beuvron (FR)
(72) Inventeur: De Durat, Henri, 85600 SAINT HILAIRE DE LOULAY (FR); Soulier, Christian, 41600 LAMOTTE BEUVRON (FR)
(74) Mandataire: Le Guen-Maillet

(56) Documents cités:
- EP-A1- 1 182 023
- DE-A1- 19 600 827
- FR-A1- 2 974 589

## Description

La présente invention se rapporte à un procédé de fabrication d'objets manufacturés par moulage d'une matière expansée.

Il est connu de fabriquer un objet en injectant des billes de polystyrène préalablement expansées dans un moule de fabrication, puis de les dilater par injection de vapeur, ce qui a pour effet de les agglomérer mutuellement. Le moule est ensuite ouvert et l'on démoule l'objet fabriqué. Certains coffres-tunnels pour volets roulants sont ainsi fabriqués de la sorte.

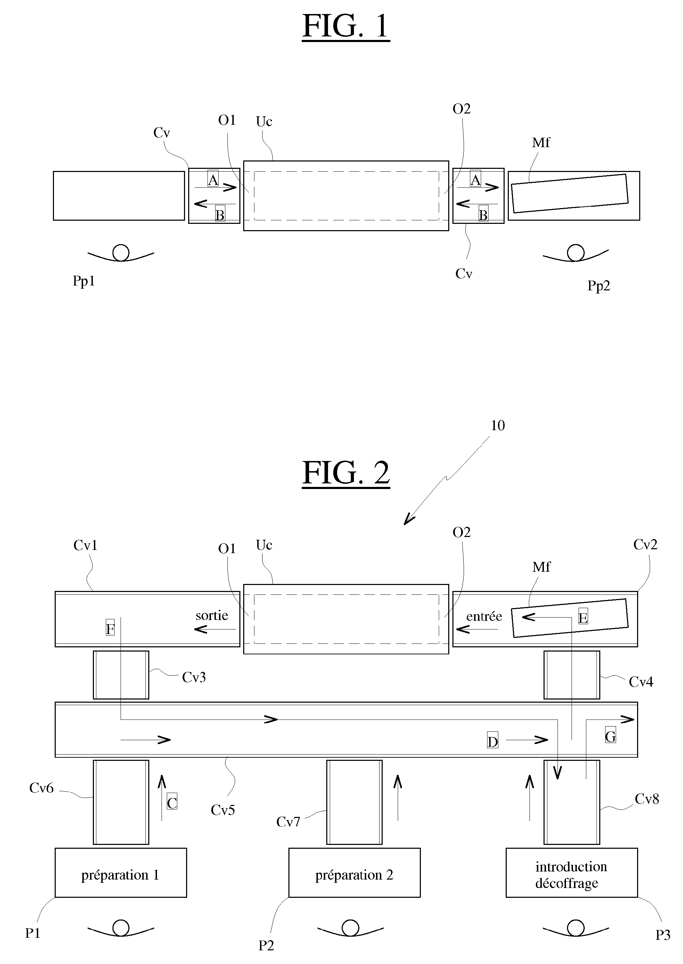

Une technique industrielle de fabrication connue, présentée sur la Fig. 1, consiste à utiliser une unité de cuisson Uc de moules de fabrication Mf, associée à deux postes de préparation Pp1 et Pp2. L'unité est pourvue de deux ouvertures O1 et O2 qui servent alternativement d'entrée et de sortie aux moules de fabrication. Les deux postes de préparation Pp1 et Pp2 sont disposés de part et d'autre des deux ouvertures O1 et 02. Des convoyeurs Cv interposés permettent le transport des moules Mf entre l'unité de cuisson Uc et les postes de préparation Pp. Le travail des deux opérateurs consiste à préparer un moule de fabrication, l'introduire dans l'unité de cuisson et l'extraire à l'issue de la fabrication de l'objet par injection de billes de polystyrène pré-expansées puis injection de vapeur dans le moule de fabrication. Le moule est ensuite ouvert pour que puisse être décoffré l'objet fabriqué, par exemple un coffre-tunnel.

Le travail est réparti entre les deux postes entre, d'une part, la préparation d'un moule de cuisson et, d'autre part, l'extraction du moule, le décoffrage de l'objet fabriqué et l'introduction d'un nouveau moule de cuisson. La répartition du travail est réalisée de préférence de manière alternative entre les deux postes de travail en faisant circuler dans un sens puis dans l'autre les moules de fabrication à l'intérieur de l'unité de cuisson Uc, comme le suggèrent les flèches A et B.

L'existence de nombreux types de coffres-tunnels nécessite une grande variété de configurations de moules de fabrication, des plus simples aux plus complexes. Cette disparité génère des temps de construction forts variables et ralentit la productivité, puisque les temps de préparation et les temps d'extraction/décoffrage/introduction sont rarement identiques. Il s'en suit un temps d'utilisation de l'unité de cuisson qui n'est pas optimisé.

Le document DE-A-19600827 décrit un procédé de fabrication de produits obtenu par injection d'une matière expansée dans un moule de fabrication cette opération étant mise en oeuvre dans une unité de cuisson comportant une entrée et une sortie pour ledit moule de fabrication. Il consiste à utiliser un convoyeur principal desservi par au moins un poste dédié à la préparation de moules de fabrication de sorte à pouvoir transférer, à suivre, les moules préparés vers l'entrée de l'unité de cuisson.

Le demandeur a ainsi cherché une solution pour accroître la productivité dans la fabrication d'objets élaborés par moulage d'une matière expansée.

A cet effet, est proposé un procédé de fabrication de produits obtenus par injection d'une matière expansée, telle que des billes de polystyrène, dans un moule de fabrication, suivie d'une injection de vapeur, ces opérations étant mises en oeuvre dans une unité de cuisson comportant une entrée et une sortie pour ledit moule de fabrication, le procédé consistant à utiliser un convoyeur principal desservi par au moins un poste dédié à la préparation de moules de fabrication de sorte à pouvoir transférer, à suivre, les moules préparés vers l'entrée de l'unité de cuisson ; selon l'invention, le procédé consiste à interposer un poste dédié, notamment, à l'introduction des moules dans l'unité de cuisson et le cas échéant au décoffrage des moules, entre les postes dédiés à la préparation de moules de fabrication et l'entrée de l'unité de cuisson.

L'unité de cuisson fonctionne en flux continu. On peut ainsi prévoir autant de postes de préparation pour saturer l'introduction des moules dans l'unité de cuisson qui peut alors être utilisée à son potentiel maximum, sans délai d'attente.

Le changement de gammes de fabrication peut également être anticipé de la même manière.

Le poste d'introduction et le cas échéant de décoffrage, permet de diriger les moules préparés vers l'unité de cuisson, de démouler les produits fabriqués contenus dans les moules sortant de l'unité de cuisson.

Le moule de fabrication peut refroidir le temps de son transfert sur le convoyeur principal.

Selon une caractéristique additionnelle de l'invention, le procédé consiste à prévoir entre un et quatre postes de préparation.

Par cette modularité, on peut ainsi aborder la fabrication d'une relativement grande gamme de produits, des plus simples aux plus complexes.

Une installation pour la mise en oeuvre du procédé décrit ci-avant fait également partie de l'invention.

On obtient ainsi une installation relativement compacte.

Une utilisation du procédé décrit ci-avant fait aussi partie de l'invention et pour laquelle le procédé consiste à fabriquer des coffres-tunnels.

En variante, le procédé consiste à fabriquer des éléments de cadre d'une huisserie.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue de dessus d'une installation connue de fabrication d'objets obtenus par moulage d'une matière expansée dans des moules de fabrication selon l'invention et,
la Fig. 2 représente une vue de dessus d'une installation de fabrication d'objets obtenus par moulage d'une matière expansée dans des moules de fabrication selon l'invention.

L'installation 10, présentée sur la Fig. 2, est destinée à fabriquer des objets à l'aide de moules de fabrication Mf. La fabrication des objets est obtenue par injection de billes de polystyrène dans un moule, puis par injection de vapeur dans ledit moule. Ces étapes sont mises en oeuvre dans une unité de cuisson Uc. Elle possède deux ouvertures 02, 01, formant respectivement une entrée et une sortie pour les moules de fabrication.

Plusieurs postes de travail P, au nombre de trois sur cette Fig. 2, sont aménagés à proximité de l'unité de cuisson Uc pour préparer des moules, les introduire et les extraire de l'unité de cuisson, sortir de leurs moules les objets fabriqués.

Plusieurs convoyeurs Cv sont agencés pour acheminer les moules de fabrication dans l'unité de cuisson Uc et pour les évacuer. On voit ainsi sur cette Fig. 2, un convoyeur Cv1 positionné en face de l'ouverture de sortie 01 pour extraire les moules de l'unité de cuisson Uc, un convoyeur d'attente Cv2 positionné en face de l'ouverture d'entrée 02 pour introduire les moules dans l'unité de cuisson Uc. Deux convoyeurs intermédiaires Cv3 et Cv4 de distribution relient respectivement les deux convoyeurs Cv1, Cv2, avec un convoyeur Cv5 principal. Ce dernier relie tous les postes de travail P. Des convoyeurs secondaires Cv6-Cv8 peuvent être utilisés pour permettre aux opérateurs d'alimenter le convoyeur principal Cv5 depuis leurs postes de travail.

On distingue ainsi deux postes de préparation P1 et P2 dédiés à la préparation des moules, un poste de travail P3 dédié à l'introduction des moules dans l'unité de cuisson Uc et le cas échéant au décoffrage des moules sortant de ladite unité de cuisson. Par introduction, il faut comprendre le transfert du moule préparé sur le convoyeur d'attente Cv2. L'introduction du moule à l'intérieur de l'unité de cuisson peut en effet être réalisée à l'aide d'un robot. Il en va de même de l'extraction du moule sur le convoyeur Cv1 et son transfert sur le convoyeur principal Cv5, qui peuvent être mis en oeuvre également par un robot.

Le poste de travail P3 est interposé entre les postes de préparation P1, P2 et l'entrée 02 de l'unité de cuisson. Dans leur agencement, les différents postes de travail peuvent présenter des configurations identiques. Le poste P3 peut ainsi être utilisé pour préparer, le cas échéant, des moules.

La fabrication de produits dans l'installation 10 se présente de la manière suivante. Un premier moule Mf est préparé sur l'un, par exemple P1, des postes de travail, puis est acheminé par le poste P3 dans l'unité de cuisson Uc en franchissant l'ouverture 02, comme l'indiquent les flèches C, D et E, et en utilisant les convoyeurs Cv6, Cv5 et Cv4.

Pour préparer un moule, il faut utiliser une carcasse sur laquelle sont fixées des préformes qui vont définir la forme du produit moulé, y implanter des composants qui vont être intégrés dans le produit à l'issue de sa fabrication, tels une armature de renfort de la structure du produit, des plaques de recouvrement apparentes, des rails d'appui, etc.. Le moule est ensuite fermé à l'aide de plaques pour permettre à la matière de s'expandre et former de la sorte le produit. Ainsi, selon la nature du produit qui va être fabriqué, le temps passé pour monter un moule peut varier d'un facteur de 1 à 4. A titre d'information, il existe à la date de dépôt de la demande, environ cinq cent références de coffre-tunnel proposées par le déposant.

D'autres moules Mf sont préparés et envoyés sur le convoyeur principal. Ils sont mis en attente sur le convoyeur Cv2. Ainsi, il y a toujours en période de production au moins un moule Mf qui demeure prêt à être introduit dans l'unité de cuisson Uc. On réduit de la sorte les temps d'attente et l'unité de cuisson est utilisée au maximum de sa capacité. Suivant la durée pour préparer les moules d'une production, on utilise jusqu'à quatre postes de travail pour alimenter le convoyeur principal Cv 5.

La fabrication du produit étant terminée, le premier moule Mf est extrait de l'unité de cuisson Uc au travers de l'ouverture de sortie 02 comme l'indique la flèche E.

Un second moule est immédiatement introduit dans l'unité de cuisson Uc. Le premier moule Mf est transféré sur le convoyeur principal Cv5 vers un poste et notamment le poste P3, dédié en principe aux étapes d'introduction et de décoffrage du moule. Le moule est ouvert, puis le produit fini est évacué sur le convoyeur principal Cv5, suivant la flèche F, vers un lieu de stockage. Le moule est ensuite démonté, nettoyé et ses constituants sont rangés dans un magasin ou réutilisés par les postes de préparation P1, P2.

Le procédé de l'invention permet de rationaliser la préparation de moules de fabrication de produits plus ou moins complexes à fabriquer en évitant les temps morts à l'étape de cuisson dans une unité de cuisson. Le rendement de ladite unité de cuisson est de la sorte optimisé, étant précisé qu'elle coûte relativement cher.

Grâce à l'utilisation du procédé, le changement de gammes de produits peut être anticipé et la production n'est pas arrêtée.

Le procédé de l'invention permet de déconnecter les étapes de préparation des moules de fabrication de l'étape de moulage/cuisson, car il y a, compte tenu de la présence de plusieurs postes, toujours un moule en attente.

Le procédé de l'invention peut également être utilisé pour la fabrication des éléments de cadre d'une huisserie.

## Revendications

1. Procédé de fabrication de produits obtenus par injection d'une matière expansée, telle que des billes de polystyrène, dans un moule de fabrication suivie d'une injection de vapeur, ces opérations étant mises en oeuvre dans une unité de cuisson (Uc) comportant une entrée (02) et une sortie (01) pour ledit moule de fabrication, le procédé utilisant un convoyeur principal (Cv5) desservi par au moins un poste (P1, P2) dédié à la préparation de moules de fabrication (Mf) de sorte à pouvoir transférer, à suivre, les moules préparés vers l'entrée (02) de l'unité de cuisson (Uc), et dans lequel on interpose un poste (P3) dédié, à l'introduction des moules dans l'unité de cuisson (Uc) et le cas échéant au décoffrage des moules. entre les postes (P1, P2) dédiés à la préparation de moules de fabrication (Mf) et l'entrée (02) de l'unité de cuisson (Uc).

2. Procédé de fabrication selon la revendication 1, dans lequel sont prévus entre un et quatre postes de préparation (P).

3. Installation (10) pour la mise en oeuvre du procédé selon l'une quelconque des revendications précédentes, l'installation comprenant une unité de cuisson (Uc), un convoyeur principal (Cv5) desservi par au moins un poste (P1, P2) dédié à la préparation de moules de fabrication (Mf), dans laquelle un autre poste (P3) dédié à l'introduction des moules dans l'unité de cuisson (Uc) et le cas échéant au décoffrage des moules, est interposé entre les postes (P1, P2) dédiés à la préparation de moules de fabrication (Mf) et l'entrée (02) de l'unité de cuisson (Uc).

4. Utilisation du procédé selon l'une quelconque des revendications 1 ou 2 pour fabriquer des coffres-tunnels.

5. Utilisation du procédé selon l'une quelconque des revendications 1 ou 2 pour fabriquer des éléments de cadre d'une huisserie.

## Patentansprüche

1. Verfahren zur Herstellung von Produkten, die durch Einspritzen eines geschäumten Materials, wie zum Beispiel Polystyrolkugeln, in eine Gussform, gefolgt von Einleiten von Dampf erhalten werden, wobei diese Arbeitsvorgänge in einer Aushärtungseinheit (Uc) durchgeführt werden, die einen Eingang (02) und einen Ausgang (O1) für die Gussform aufweist, wobei das Verfahren eine Hauptfördereinrichtung (Cv5) verwendet, die von mindestens einer Station (P1, P2) versorgt wird, die eigens für die Vorbereitung von Gussformen (Mf) bestimmt ist, um die vorbereiteten Formen nachfolgend zu dem Eingang (02) der Aushärtungseinheit (Uc) transportieren zu können, und wobei eine Station (P3), die eigens für das Einleiten der Formen in die Aushärtungseinheit (Uc) und gegebenenfalls das Entformen zwischen den eigens für die Vorbereitung von Gussformen (Mf) vorgesehenen Stationen (P1, P2) und dem Eingang (02) der Aushärtungseinheit (Uc) angeordnet wird.

2. Herstellungsverfahren nach Anspruch 1, wobei zwischen einer und vier Vorbereitungsstationen (P) vorgesehen sind.

3. Anlage (10) zum Durchführen des Verfahrens nach einem der vorhergehenden Ansprüche, wobei die Anlage eine Aushärtungseinheit (Uc), eine Hauptfördereinrichtung (Cv5), die von mindestens einer eigens für die Vorbereitung von Gussformen (Mf) bestimmten Station (P1, P2) versorgt wird, wobei eine eigens für das Einleiten der Formen in die Aushärtungseinheit (Uc) und gegebenenfalls das Entformen bestimmte andere Station (P3) zwischen den eigens für die Vorbereitung von Gussformen (Mf) vorgesehenen Stationen (P1, P2) und dem Eingang (02) der Aushärtungseinheit (Uc) angeordnet ist, umfasst.

4. Verwendung des Verfahrens nach einem der Ansprüche 1 oder 2 zur Herstellung von Tunnelkästen.

5. Verwendung des Verfahrens nach einem der Ansprüche 1 oder 2 zur Herstellung der Rahmenelemente einer Türeinfassung.

## Claims

1. Method for manufacturing products obtained by injection of an expanded material, such as polystyrene balls, into a manufacturing mould followed by an injection of steam, these operations being implemented in a curing unit (Uc) comprising an input (02) and an output (01) for said manufacturing mould, the method using a main conveyor (Cv5) served by at least one station (P1, P2) dedicated to the preparation of manufacturing moulds (Mf) so as to be able to transfer, track, the prepared moulds to the input (02) of the curing unit (Uc), and in which there is interposed a station (P3) dedicated to the introduction of the moulds into the curing unit (Uc) and, if necessary, to the stripping of the moulds, between the stations (P1, P2) dedicated to the preparation of manufacturing moulds (Mf) and the input (02) of the curing unit (Uc).

2. Manufacturing method according to Claim 1, in which there are provided between one and four preparation stations (P).

3. Installation (10) for implementing the method according to either one of the preceding claims, the installation comprising a curing unit (Uc), a main conveyor (Cv5) served by at least one station (P1, P2) dedicated to the preparation of manufacturing moulds (Mf), in which another station (P3) dedicated to the introduction of the moulds into the curing unit (Uc) and, if necessary, to the stripping of the moulds, is interposed between the stations (P1, P2) dedicated to the preparation of the manufacturing moulds (Mf) and the input (02) of the curing unit (Uc).

4. Use of the method according to either one of Claims 1 or 2 for manufacturing tunnel boxes.

5. Use of the method according to either one of Claims 1 or 2 for manufacturing door frame elements.
